# EUROPÄISCHE PATENTANMELDUNG

(11) **EP 0 818 632 A2**
(43) Veröffentlichungstag der Anmeldung: **14.01.1998**
(21) Anmeldenummer: 97110850.1
(22) Anmeldetag: 01.07.1997
(51) Int. Cl.: F16B 39/32

(54) **Bundmutter aus Kunststoff**

(30) Priorität: 10.07.1996 DE 19627832
(71) Anmelder: TRW United-Carr GmbH & Co. KG, 67677 Enkenbach-Alsenborn (DE)
(72) Erfinder: Kraus, Willibald, 67269 Grünstadt (DE)
(74) Vertreter: Eder, Eugen, Dipl.-Ing.

(57) **Zusammenfassung**

Die Erfindung bezieht sich auf eine Bundmutter 1 aus Kunststoff, mit einem mit Eingriffsflächen versehenen Hauptkörper 2, an welchen sich ein umlaufender Bund 10 anschließt, wobei der Hauptkörper und der Bund 10 von einer Gewindebohrung 12 durchsetzt sind und die Bundmutter mit mindestens einem mit einem eingeschraubten Gewindebolzen 20 zusammenwirkenden Sicherungselement 15 versehen ist. Als Sicherungselement ist im Hauptkörper mindestens eine federnde Rastnase 16 angeordnet, welche über einen in einer Ausnehmung 17 des Hauptkörpers 2 verlaufenden Arm 18 mit diesem verbunden ist, wobei der Kern des Gewindebolzens am Umfang mindestens eine mit der Rastnase 16 zusammenwirkende Eingriffsnut aufweist.

## Beschreibung

Die Erfindung bezieht sich auf eine Bundmutter aus Kunststoff, mit einem mit Eingriffsflächen versehenen Hauptkörper, an welche sich ein umlaufender Bund anschließt, wobei der Hauptkörper und der Bund von einer Gewindebohrung durchsetzt sind und die Bundmutter mit mindestens einem mit einem eingeschraubten Gewindebolzen zusammenwirkenden Sicherungselement versehen ist.

Als Stand der Technik ist bereits eine Konstruktion einer Bundmutter bekannt (US-PS 3 468 212), bei welcher als Sicherungselement in die als Kunststoff ausgebildete Bundmutter eine aus Metall bestehende Scheibe eingesetzt ist. Diese Scheibe weist einen auf einen einzusetzenden Gewindebolzen abgestimmten Durchmesser auf, soll der aus Kunststoff bestehenden Bundmutter eine höhere Stabilität verleihen und zugleich einen eingeschraubten Gewindebolzen sichern.

Diese bekannte Konstruktion ist kostenaufwendig aufgebaut, da in den aus Kunststoff bestehenden Hauptkörper eine Nut eingearbeitet werden muß, in welche das aus Metall bestehende Sicherungselement einzusetzen ist. Darüber hinaus ist die Sicherung des Gewindebolzens ungenügend und es ist nicht gewährleistet, daß sie bei Vibration oder größeren Erschütterungen beibehalten wird.

Zum Stand der Technik zählen weiterhin Konstruktionen (US-PS 3 387 642, US-PS 3 886 989), welche jeweils Bundmuttern aus Kunststoff betreffen. Diese Bundmuttern weisen eine durchgehende zentrische Öffnung auf, in die einzelne Vorsprünge ragen. Die zentrische Öffnung ist hierbei mit einer glatten Wandung versehen, wobei die Vorsprünge die Aufgabe haben, mit einem eingeschraubten Gewindebolzen zusammenzuwirken und eine Art Gegengewinde beim Einschrauben zu bilden. Beide bekannten Konstruktionen sind nicht geeignet, einen eingeschraubten Gewindebolzen gegen ein unerwünschtes Lösen zu sichern.

Der vorliegenden Erfindung liegt demgegenüber die Aufgabe zugrunde, eine Bundmutter der eingangs genannten Art zu schaffen, bei welcher auf einfache Weise eine gute Sicherung eines eingeschraubten Gewindebolzens gegen unbeabsichtigtes Lösen auch bei Vibrationen oder größeren Erschütterungen gewährleistet ist.

Diese Aufgabe wird erfindungsgemäß dadurch gelöst, daß als Sicherungselement im Hauptkörper mindestens eine federnde Rastnase angeordnet ist, welche über einen in einer Ausnehmung des Hauptkörpers verlaufenden Arm mit diesem verbunden ist, wobei der Kern des Gewindebolzens am Umfang mindestens eine mit der Rastnase zusammenwirkende Eingriffsnut aufweist. Durch den Eingriff der Rastnase der Bundmutter in die Eingriffsnut des Gewindebolzens wird eine formschlüssige Sicherung erreicht, welche trotz einfachen Aufbaus einen eingeschraubten Gewindebolzen einwandfrei vor unerwünschtem Lösen auch bei größeren Einwirkungen sichert.

Die Ausnehmung mit Arm und Rastnase kann im Anschluß an den umlaufenden Bund im Hauptkörper angeordnet sein. Weiterhin besteht die Möglichkeit, daß im Hauptkörper über den Umfang verteilt zwei Ausnehmungen mit Arm und Rastnase vorgesehen sind, wodurch eine doppelte Sicherungswirkung gegeben ist. Der Arm kann hierbei parallel zur Ebene der oberen Stirnseite des Bundes verlaufen, wobei die Rastnase eine geringere Breite als die des Arms aufweist und auf die entsprechenden Abstände der Gewindesteigungen des Gewindebolzens abgestellt ist.

In weiterer Ausgestaltung der Erfindung kann die Eingriffsnut als Verzahnung ausgebildet sein, wobei beispielsweise mindestens zwei einander gegenüberliegende Bereich des Kerns des Gewindebolzens mit einer Verzahnungszone versehen sein können.

Die Erfindung wird nachfolgend anhand eines in der Zeichnung dargestellten Ausführungsbeispiels näher beschrieben. In der Zeichnung zeigen:
- Fig. 1: eine Seitenansicht der erfindungsgemäßen Bundmutter,
- Fig. 2: eine Vorderansicht der Bundmutter nach Fig. 1,
- Fig. 3: eine Draufsicht auf die Bundmutter nach Fig. 1,
- Fig. 4: die in Fig. 1 bis 3 dargestellte Bundmutter im eingebauten Zustand,
- Fig. 5: einen Querschnitt durch den Kern des in Fig. 4 dargestellten Gewindebolzens,
- Fig. 6 und 7: perspektivische Ansichten der erfindungsgemäßen Bundmutter.

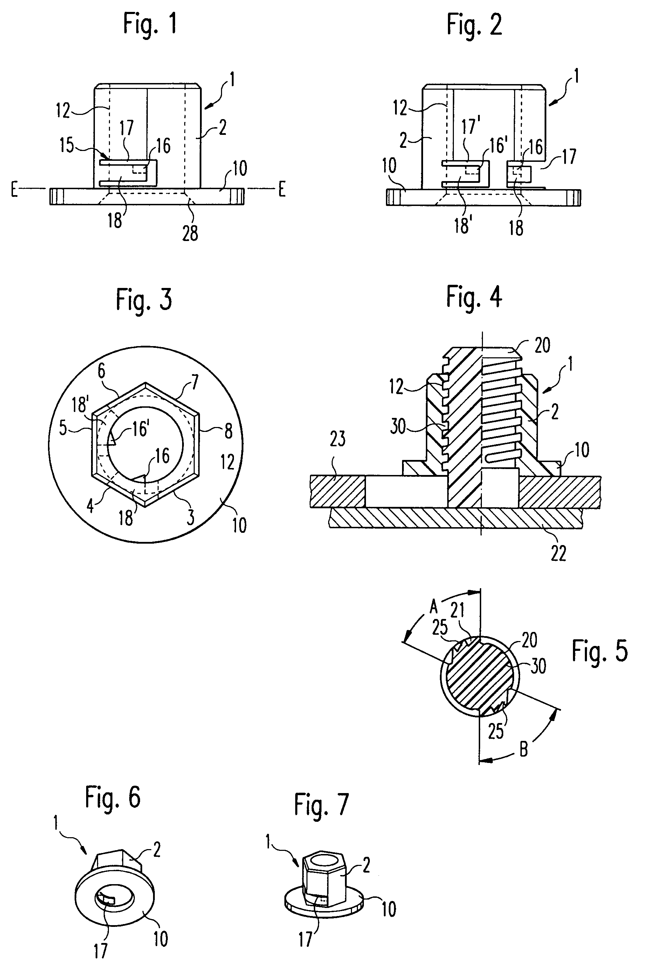

Gemäß Fig. 1 besteht die aus Kunststoff hergestellte Bundmutter 1 im wesentlichen aus einem Hauptkörper 2, an welchen sich ein umlaufender Bund 10 anschließt. Dieser Bund kann als Zylinderscheibe, als Federteller oder als beliebiger geometrischer Körper ausgebildet sein. Der Hauptkörper 2 und der Bund 10 sind von einer Gewindebohrung 12 durchsetzt. Wie aus Fig. 3 hervorgeht, weist der Hauptkörper Eingriffsflächen 3 bis 8 auf, welche im vorliegenden Fall als Sechskant ausgebildet sind.

Die Bundmutter 1 ist mit einem Sicherungselement 15 versehen, welches mit einem in Fig. 4 schematisch dargestellten Gewindebolzen 20 zusammenwirkt.

Aus Fig. 1 und 2 ist ersichtlich, daß als Sicherungselement zwei im Abstand voneinander liegende Rastnasen 16 und 16' Anwendung finden, welche jeweils mit einem Arm 18 und 18' verbunden sind. Diese Arme liegen in Ausnehmungen 17 und 17' des Hauptkörpers und sind federnd angeordnet. Dadurch ist die Rastnase 16 und 16', welche sich im vorderen Bereich des Arms 18 und 18' befindet, federnd gelagert.

Der Kern des Gewindebolzens 20 ist gemäß Fig. 5 am Umfang mit mindestens einer Eingriffsnut 21 versehen, welche bei dem vorliegenden Ausführungsbeispiel als Verzahnung 25 ausgebildet ist. Wie aus Fig. 5 hervorgeht, sind zwei Verzahnungszonen A und B am Außenumfang des Kerns 30 des Gewindebolzens 20 vorhanden, welche sich vorzugsweise gegenüberliegen, so daß in jeder Stellung der Mutter die Rastnase 16, 16' im Eingriff ist.

Aus Fig. 4 geht hervor, daß der Gewindebolzen mit einer üblichen Steigung versehen ist, wobei zwischen den einzelnen Steigungen der Kern 30 vorliegt, in welchem vorzugsweise im unteren Bereich die Verzahnungen 25 in den Zonen A und B eingeformt sind. Dieser Gewindebolzen kann beispielsweise aus Kunststoff bestehen und mit einem Teil 22 gemäß Fig. 4 verbunden sein.

Ein zu befestigendes Teil 23, welches z.B. ein Langloch 24 oder eine beliebig geformte Öffnung mit genügend Justierraum aufweist, wird mit dem Träger 22 über den Gewindebolzen 20 und die Bundmutter 2 verbunden: Hierbei wird die Bundmutter 1 mit ihrer Gewindebohrung 12 in das entsprechende Gegengewinde des Gewindebolzens 20 eingeschraubt, wobei sich die federnden Rastnasen 16 und 16' in die entsprechenden Verzahnungen 25 in den Verzahnungszonen A und B im Kern des Gewindebolzens 20 einlagern und somit infolge der Gestaltung dieser Verzahnung, welche als Klinke ausgebildet ist, die Bundmutter 1 einwandfrei und lösungssicher (z. B. bei Vibrationen, Wärmeeinfluß und Kriecheigenschaft des Kunststoffs) auf dem Gewindebolzen 20 lagert.

Aus Fig. 2 geht hervor, daß die beiden Rastnasen 16 und 16' bzw. die damit verbundenen federnden Arme 18 und 18' in den Ausnehmungen 17 und 17' über den Umfang des Hauptkörpers 2 verteilt angeordnet sind. Die Ausnehmungen 17 und 17' können über die gesamte Bolzenlänge angebracht sein, vorzugsweise - wie dargestellt - dicht oberhalb einer Ebene E-E der oberen Stirnseite des Bundes 10. Da die Rastnasen 16 und 16' mit den entsprechenden, als Klinke ausgebildeten Verzahnungen 25 des Gewindebolzens zusammenwirken, wird auf einfache Weise eine funktionssichere Halterung eines Elements, z.B. wie dargestellt, des Gewindebolzens 20 in der Bundmutter 1 gewährleistet, so daß die beiden Teile 22 und 23 funktionssicher miteinander verbunden sind.

## Patentansprüche

1. Bundmutter (1) aus Kunststoff, mit einem mit Eingriffsflächen (3 bis 8) versehenen Hauptkörper (2), an welchen sich ein umlaufender Bund (10) anschließt, wobei der Hauptkörper (2) und der Bund (10) von einer Gewindebohrung (12) durchsetzt sind und die Bundmutter mit mindestens einem mit einem darin eingeschraubten Gewindebolzen (20) zusammenwirkenden Sicherungselement (15) versehen ist,
**dadurch gekennzeichnet,**
daß als Sicherungselement (15) im Hauptkörper (2) mindestens eine federnde Rastnase (16; 16') angeordnet ist, welche über einen in einer Ausnehmung (17; 17') des Hauptkörpers (2) verlaufenden Arm (18; 18') mit diesem (2) verbunden ist und daß der Kern des Gewindebolzens (20) am Umfang mindestens eine mit der Rastnase (16; 16') zusammenwirkende Eingriffsnut (21) aufweist.

2. Bundmutter nach Anspruch 1,
**dadurch gekennzeichnet,**
daß die Ausnehmung (17; 17') mit Arm (18; 18') und Rastnase (16; 16') im Anschluß an den umlaufenden Bund (10) im Hauptkörper (2) angeordnet ist.

3. Bundmutter nach Anspruch 1,
**dadurch gekennzeichnet,**
daß im Hauptkörper (2) über den Umfang verteilt zwei Ausnehmungen (17; 17') mit Arm (18; 18') und Rastnase (16; 16') vorgesehen sind.

4. Bundmutter nach einem der vorhergehenden Ansprüche,
**dadurch gekennzeichnet,**
daß der Arm (18; 18') parallel zur Ebene (E-E) der oberen Stirnseite des Bundes (10) verläuft.

5. Bundmutter nach einem der vorhergehenden Ansprüche,
**dadurch gekennzeichnet,**
daß die Rastnase (16; 16') eine geringere Breite als die des Arms (18; 18') aufweist.

6. Bundmutter nach Anspruch 1 oder einem der vorhergehenden Ansprüche,
**dadurch gekennzeichnet,**
daß die Eingriffsnut (21) als Rastverzahnung (25) ausgebildet ist.

7. Bundmutter nach Anspruch 6,
**dadurch gekennzeichnet,**
daß mindestens zwei einander gegenüberliegende Bereiche des Kerns des Gewindebolzens (20) mit einer Verzahnungszone (A, B) versehen sind.

8. Bundmutter nach einem der vorhergehenden Ansprüche,
**dadurch gekennzeichnet,**
daß der Hauptkörper als Eingriffsflächen (3 bis 8) als Sechskant ausgebildet ist.
